# EUROPEAN PATENT SPECIFICATION

(11) **EP 0 422 773 B1**
(45) Date of publication and mention of the grant of the patent: **22.11.1995**
(21) Application number: 90309754.1
(22) Date of filing: 06.09.1990
(51) Int. Cl.: A01G 3/04, B23D 49/16, B27B 17/00, B27G 19/00

(54) **Power-driven cutting tools**
Kraftbetriebenen Schneidwerkzeugen
Outils de coupe motorisés

(30) Priority: 12.09.1989 GB 8920620
(43) Date of publication of application: 17.04.1991
(73) Proprietor: ELECTROLUX OUTDOOR PRODUCTS LIMITED, Newton Aycliffe, Co Durham DL5 6UP (GB)
(72) Inventor: Holmes, Alan Herbert, Darlinton, Co, Durham DL1 4DQ (GB)
(74) Representative: Arthur, Bryan Edward

(56) References cited:
- EP-A- 0 214 455
- DE-A- 3 231 899
- DE-B- 1 582 842
- US-A- 1 528 731
- US-A- 1 779 857
- US-A- 3 143 798
- US-A- 3 343 613
- US-A- 4 651 420

## Description

This invention relates to power-driven cutting tools. In particular the invention relates to a power-driven cutting tool capable of use as a hedge trimmer or a saw or a combination of a hedge trimmer and a saw. Hedge trimmers and saws are known having two relatively reciprocatable blades. Power-driven saws, for example, tree felling and logging saws are also known including one or more endless chains supporting saw teeth or endless chains in which individual links constitute saw teeth. Throughout this specification and claims a toothed blade or supported saw teeth will be referred to as a "cutting member".

US-A-4,651,420 to Lonnecker discloses a vegetation cutter having a boom in the form of a pole upon which a motor is mounted at one end and cutting blades at the other, the cutting blades being hingedly attached to the end of the boom. The cutting blades include a conventional sickle-type cutter having a fixed set of finger teeth and a movable set of finger teeth which moves in a reciprocal manner against the first resulting in a cutting action as vegetation is severed by the interacting teeth. The movable set of teeth has a saw attached at one end, and when the set of finger teeth move reciprocally, the saw moves with a sawing action. The motor drives the cutting blades via a cable which moves reciprocally and longitudinally within a sheath. The cutting blades are tilted by a handle mounted on the boom which is connected to a hinge arm by a control rod. In use, an operator holds the boom.

It is an object of the present invention to produce a power-driven cutting tool such as a hedge trimmer and/or a saw in which the cutting member can be driven when placed in two or more operating positions relative to a handle for the tool.

According to the present invention, a power driven cutting tool comprises a power source, a cutting member including at least one movable toothed blade, drive means for drivingly connecting the power source and the cutting member, a support means supporting the cutting member and including a support body and at least one handle and a hinge connection having a hinge pin disposed transversely of the cutting member whereby the cutting member can be disposed in any one of a plurality of different operating positions characterised in that the power source, the cutting member, the drive means and the at least one handle constitute a cutter portion and in that the cutter portion is hingedly carried on the support body by the hinge connection disposed between the cutter portion and the support body. the power source may be an electric motor or an internal combustion engine.

According to the preferred embodiment of this invention the tool includes means for securing the cutting member in any selected operating position. The tool may further comprise a handle carried by the support means, a main switch for controlling electric power to the power source and at least one emergency safety switch mounted on the handle for actuation by an operator.

Preferably, the cutting member comprises two blades each having cutting teeth and mounted for relative reciprocating movement to produce a cutting action resulting from the interaction of the teeth of each blade. The tool may include means for independently driving each blade. Each blade may be mounted for driving movement relative to the other. Alternatively, one blade may be fixed in which case the other blade is mounted for driving movement relative to the fixed blade. The blades may be elongate with teeth disposed along each longitudinal edge. Alternatively, the blades may be formed as sectors of a circle.

According to one embodiment, the tool includes a toothed blade which is fixed and another blade which comprises a plurality of teeth mounted on an endless carrier forming a loop and means for driving said other blade around a closed path to produce a cutting action from interaction of the teeth of each blade. Alternatively each blade is in the form of a sector of a circle and a plurality of teeth are disposed on the arcuate boundaries of the respective blades. One blade may include a portion disposed adjacent to the support means having saw teeth shaped for cutting solid wood-like material, and a cover slidably mounted on at least the said one blade for shielding the saw teeth when not in use.

The tool may include a first handle and a second handle, the first handle being fixed relative to the support body, and the second handle being hingedly movable around the hinge pin together with the cutting member, the power source and the drive means.

Various embodiments of a power-driven cutting tool in accordance with the invention will now be described, by way of example, with reference to the accompanying drawings in which:
Figure 1 is a perspective of a hedge trimmer/saw combination tool including two elongate and relatively reciprocatable toothed hedge trimming blades and with one of the two blades including a portion having saw teeth for cutting branches when a shield is displaced to permit sawing;
Figure 1A is a similar view to Figure 1 in which the saw-toothed portion of the blade is shielded and in a non-use position;
Figure 2 is a perspective of a tool similar to that shown in Figure 1 and taken from the opposite view point;
Figure 2A is an enlarged perspective of a cutting member carrier bar assembly for the tool of Figure 2;
Figure 2B is a perspective showing essential elements of a handle and electric control switch arrangement for the tool of Figure 2;
Figure 3 is a perspective of the tool of Figure 1 taken from the opposite direction;
Figures 4A to 4C show, in perspective details of further handle control switch arrangement.
Figure 5 is a part sectional side elevation of yet a further embodiment according to the invention;
Figure 6 shows a tool in perspective with inset details of safety edge blades (Figure 6A) and a pneumatically operated control switch;
Figure 7 shows, in perspective modified cutting teeth including a toothed skeleton inlaid to a plastic support;
Figure 8 and 8A show in perspective a further cutting blade assembly and cutting bar respectively, and
Figure 9 shows, an alternative eccentric device for driving the cutting blades.

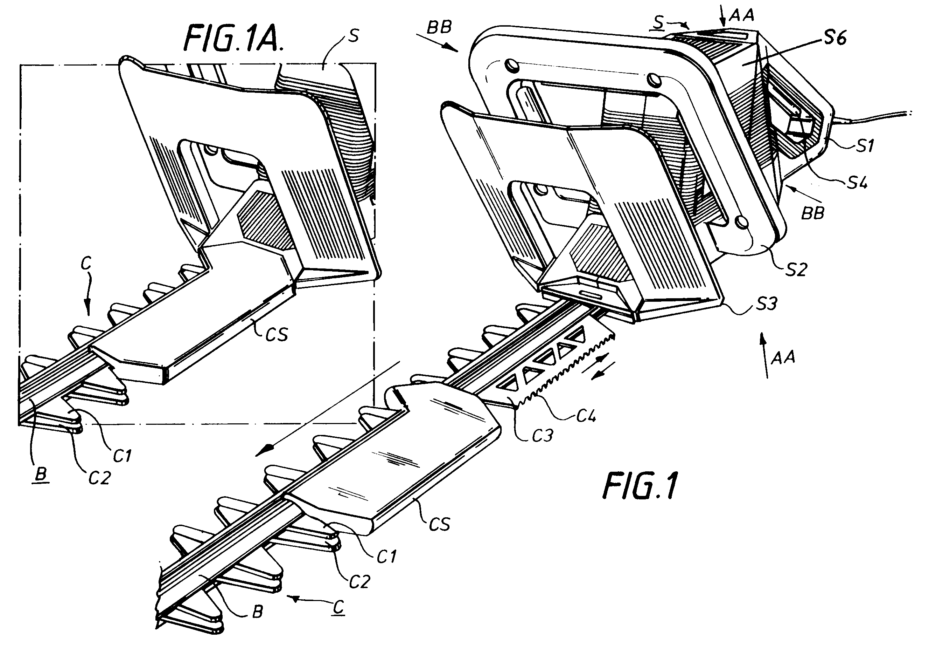

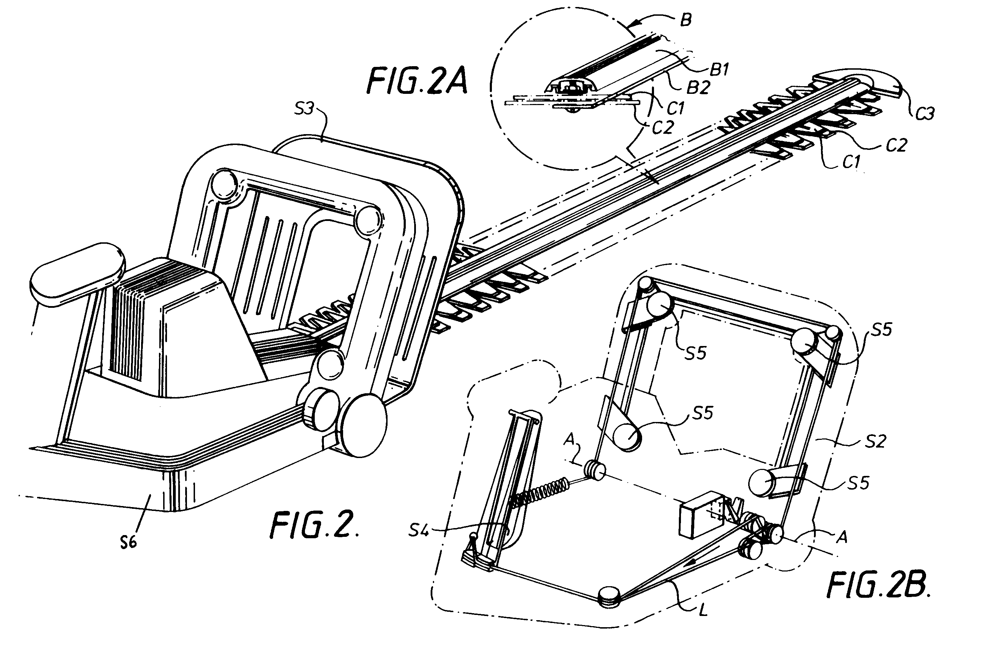

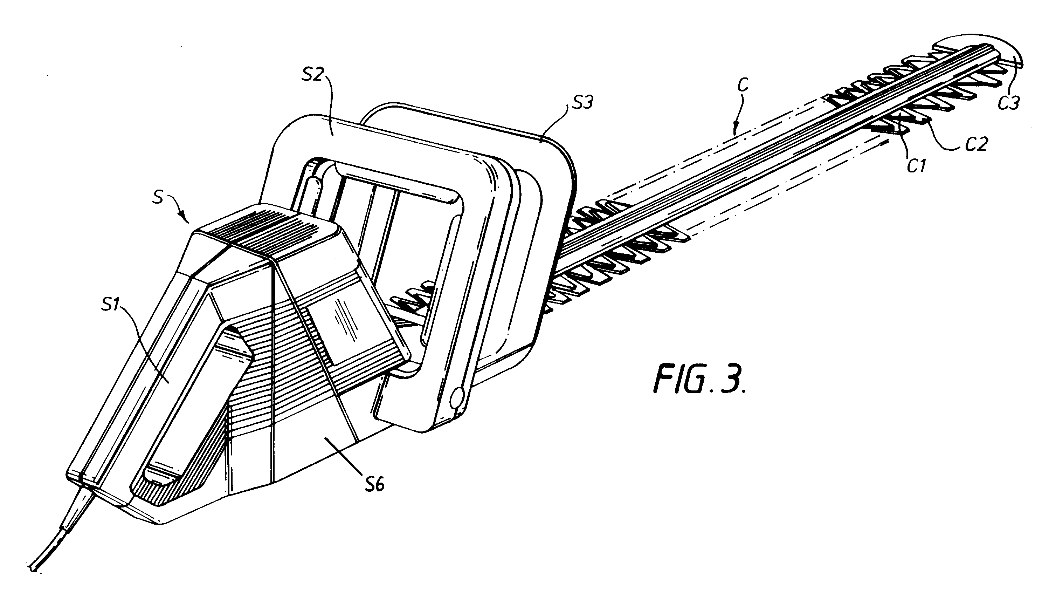

Referring to Figures 1 and 1A and 3 the hedge trimmer/saw combination shown has a support means S which supports a cutting member C. A power source M, not shown, in the form of an electric motor or internal combustion engine is mounted within the support means S. The cutting member C is mounted in a carrier bar B (see Figure 2A) consisting of an upper member B1 and a lower member B2 between which two elongate toothed blades C1 and C2 are supported for relative longitudinal and reciprocal movement. A safety end-stop C3 of generally semi-circular shape constitutes a safety device to prevent those extreme teeth remote from the support means of the toothed blades C1, C2 from becoming entangled with an operators clothing or a portion of a hedge which is not to be trimmed or injuring a person.

As shown in Figure 1 a portion C3 of the toothed blade C1 is formed with saw teeth C4. Further, teeth from blade C2 have been removed in the region of the saw teeth C4 so that sawing of e.g. branches is effected simply by reciprocal movement of portion C3 and without cooperation of teeth on blade C2. If desired, however, teeth similar to C4 may be formed on a corresponding portion of the blade C2 but, in such a case the teeth on the respective blades C1 and C2 should be formed with an opposite "set" so as to clear saw dust from a saw kerf produced during sawing. When an operator does not wish to use the saw C3, a cover C5, which is suitably carried on the carrier bar B, is slid into the position shown in Figure 1A shielding the teeth C4.

The support means S has a support body S6, two handles S1 and S2 and a hand shield S3. A main control switch S4 for controlling electric power supplied to the electric motor housed within the support body S6 is mounted in the handle S1. Moreover, as shown in Figure 2B, four overriding pressure pad switches S5 are positioned as indicated on the handle S2 so that an operator may, in the case of an emergency, readily cut-out supply of power to the electric motor. The spring biased linkage system L serves to connect each of the four pressure switches S5 and the switch S4.

The handle S2 may be angularly displaceable fore- and aft- about axis A-A (Figure 2B) via a restraining arrangement, not shown, so that in the event that an operator lunges or falls during operation of the cutting tool, the act of lunging or falling displaces the handle about the axis A-A to displace the linkage L and, thereby, cut-out power supply to the electric motor.

Drive from the electric motor to the blades of the cutting member C may take the form of any conventional driving linkage to produce reciprocal movement of the cutting blades C1 and C2 such as an eccentric or cam drive. Drive to the eccentric or cam drive may be via a system of bevel or spur gears G1/G2. Where drive is accomplished using a bevel gear drive, the handle and support body S6 in which electric motor M is housed may be angularly displaced in one or more indexed steps so as to change the angle of the plane containing the blades C1/C2 relative to the handle S1.

A safety cut-out switch (not shown) is mounted in handle S2 so that, in the event of an emergency, an operator can activate either of the switches S2 or S4 to cut-out power supplied to the electric motor.

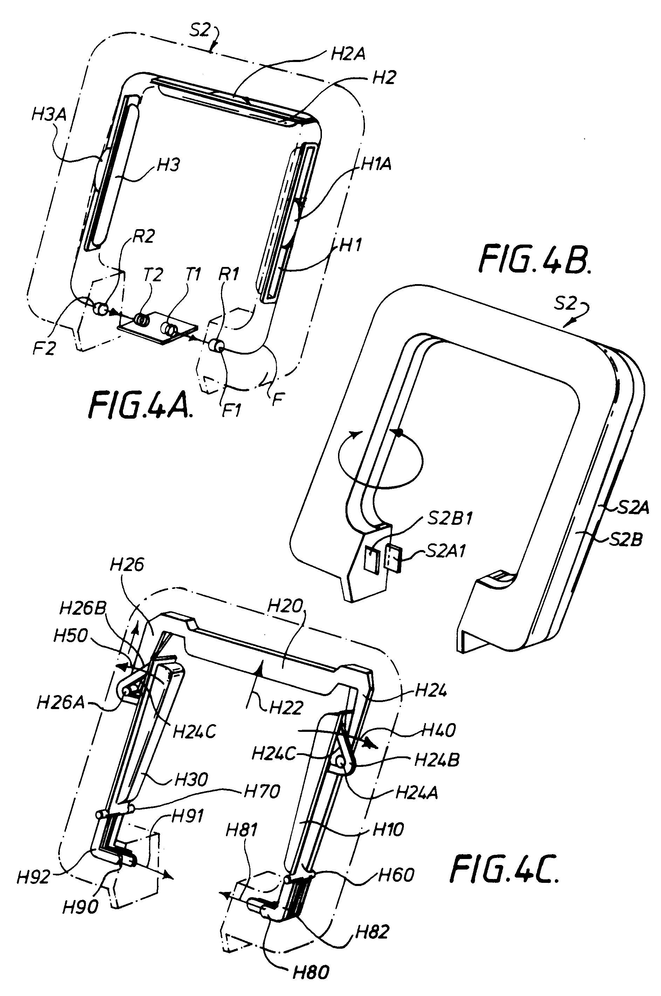

Figures 4A, 4B and 4C show in exploded detail, handle control switch arrangement for the handle S2. In Figure 4A a non-cohesive, uncoated fibre optic F is used in conjunction with an LED transmitter-receiver combination. Ends F1 and F2 of the fibre optic F are optically connected to receivers R1 and R2 which, in turn, are mounted in optical alignment with LED transmitters T1 and T2. Resiliently mounted handle grips H1, H2 and H3 each include an arcuate extension H1A, H2A and H3A which bear against the optical fibre F when the optical fibre is in an "un-bent" or "non-distorted" attitude, that is when the cutting tool is operating normally under control of the main control switch S4 (see Figure 1). When, however, an operator wishes to cut-off power to the power source housed within the support means, he may do so promptly by either using the main control switch S4 or any one of the interlocked switches H1, H2 or H3 which upon depression cause the appropriate arcuate extension H1A, H2A or H3A or bend the fibre optic F and, thereby reduce the amount of light transmitted to either receiver R1 or R2 so as to trip a control switch and cut-out power to the motor M.

Figure 4B shows a handle S2 of similar shape to that shown on Figure 4A but, in this case power to the motor M is cut-out by a resistance controlled switch arrangement. The handle S2 is constructed from two interconnected components S2A and S2B and each component carried an associated conductive plastic plate S2A1 and S2B1 respectively. Gripping and squeezing together the two handle components S2A and S2B alters the resistance between the plates S2A1 and S2B1 which triggers the control switch. If desired, the two conductive plates S2A1 and S2B1 may be mounted in a mini computer which is operable according to a change in status of an electrical parameter (e.g. capacitive resistive, voltage or current) to thereby cut-out power to the motor M.

In contrast to the electrical control switch arrangements of Figures 4A and 4B, Figure 4C shows a mechanical interlock system. As shown in Figure 4C, the handle S2 houses three handle grips H10, H20 and H30. Handle grips H10 and H30 are angularly displaceable in the direction of arrows H40 and H50 about pivot points H60 and H70 respectively. Such angular displacement causes ends H80 and H90 of bell cranks H82 and H92 to be moved inwardly in the direction of arrows H81 and H91 to trip the control switch and cut-out power to the motor M. The handle grip H20 is mounted for sliding movement against a biasing force in the direction of arrow H22. The handle grips H20 has two arms H24 and H26 each carrying a respective pin H24A and H26A located, as shown in a triangular apertured member H24B and H26B. Displacement of the handle grip H20 in the direction the arrow H22 causes the pins H24A and H26A to cooperate with surfaces H24C and H26C thereby causing the handle grips H10 and H30 to be angularly displaced in the direction of the arrows H40 and H50 to trip the control switch as previously described.

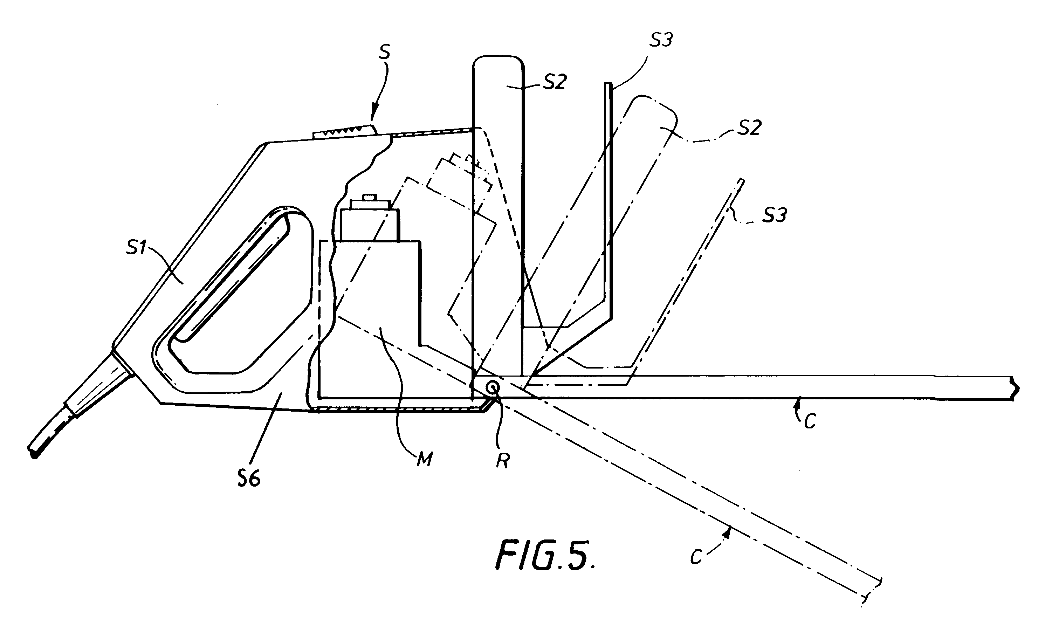

Referring to Figure 5 handle S2, motor M and the cutting member C are mounted for pivotal movement about axis R and means (not shown) are provided for locking the pivotally movable parts in any desired angular position.

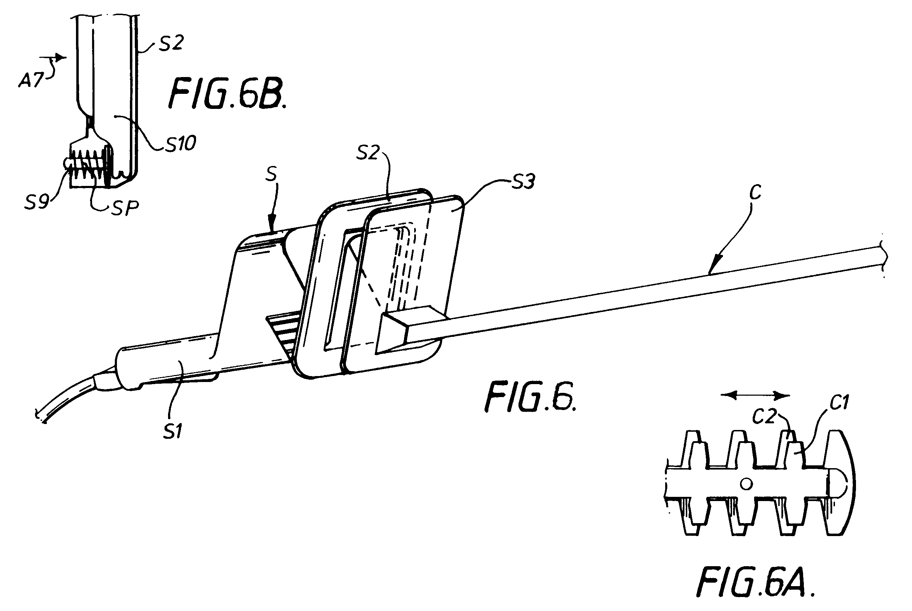

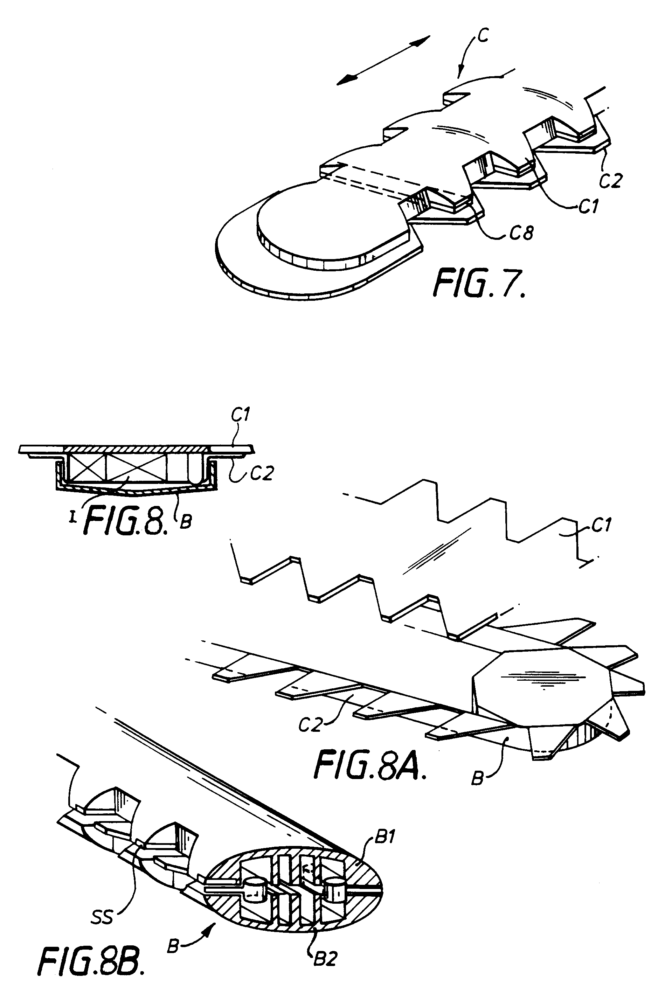

Figures 6, 6A and B show another embodiment of the cutting tool in which a safety switch S9 supported in handle S2 is operated against an air sack S10 as shown in Figure 6B. Compression of the air pack S10 in the direction of arrow A7 causes expansion of the sack against a spring biassed switch plunger SP to break an electrical connection between a switch not shown. Further, as shown in Figure 6A the teeth of the cutter blade C1 are of narrower width than the teeth of blade C2. A similar toothed formation is shown in Figure 7 modified with individual steel teeth C8 inlaid in the upper toothed bar C1 which is made from a plastic material.

Figure 7 shows a modification of the cutting member C in which the blade C1 is made from a plastics material having a skeleton of metal teeth C8 inlaid therein.

Figures 8 and 8A show a fixed cutting blade C1 and a toothed cutting member C2 in the form of an endless chain which is supported on a carrier bar B and a multi faced idler pulley I disposed remotely from the handle S2 and support means S not shown. A modified, elliptically sectioned carrier bar made in two parts B1 and B2 is shown in Figure 8B. In Figure 8B, the upper carrier bar B1 is formed with fixed teeth faced with steel inserts SS whereas teeth equivalent to those on the cutting member C2 are mounted for reciprocating movement within the carrier bar B as previously described.

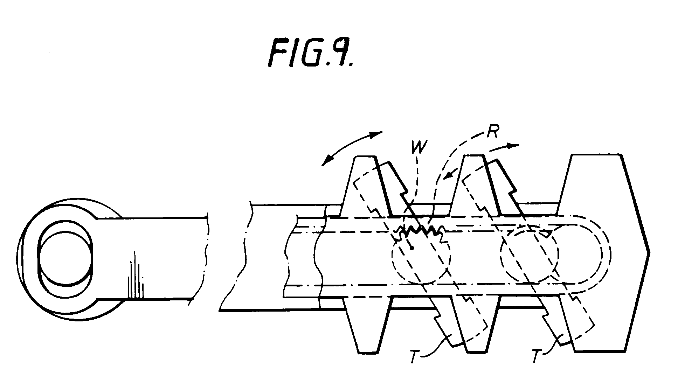

Figure 9 shows an alternative eccentric device for the cutting teeth in which toothed elements T are carried on a toothed wheel W driven by a rack R which may be in the form of an endless chain or a reciprocatable toothed bar.

The handle S1 may, of itself, be mounted for pivotal movement relative to the support means S and cutting blades considered together as a unitary structure.

## Claims

1. A power driven cutting tool comprising
a power source (M)
a cutting member (C) including at least one movable tooth blade,
drive means for drivingly connecting the power source (M) and the cutting member (C),
a support means (S) supporting the cutting member (C) and including a support body (S6) and at least one handle (S2), and
a hinge connection (R) having a hinge pin disposed transversely of the cutting member (C) whereby the cutting member (C) can be disposed in any one of a plurality of different operating positions
characterised in that the power source (M), the cutting member (C) the drive means and the at least one handle (S2) constitute a cutter portion, and in that the cutter portion is hingedly carried on the support body (S6) by the hinge connection (R) disposed between the cutter portion and the support body (S6).

2. A power driven cutting tool according to a claim 1 characterised by means for securing the cutting member (C) in any selected operating position.

3. A tool according to claim 1 or 2 characterised in that the tool further comprises a handle (S1) carried by the support means (S), a main switch (S4) for controlling electric power to the power source (M) and at least one emergency safety switch mounted on the handle (S1) for actuation by an operator.

4. A tool according to any preceding claim characterised in that the cutting member (C) comprises two blades (C1,C2) each having cutting teeth and means for creating relative reciprocating movement of the blades to produce a cutting action resulting from the interaction of the teeth of each blade (C1,C2).

5. A tool according to claim 4 characterised in that the tool includes means for independently driving each blade (C1,C2).

6. A tool according to claim 4 characterised in that one blade (C2) is fixed and the other blade (C1) is mounted for reciprocating movement relative thereto.

7. A tool according to claim 4 characterised in that one toothed blade (C2) is fixed and the other blade (C1) comprises a plurality of teeth mounted on an endless carrier forming a loop, and means for driving the said other blade around a closed path to produce a cutting action from interaction of the teeth of each blade (C1,C2).

8. A tool according to claim 4 characterised in that each blade (C1,C2) is in the form of a sector of a circle and a plurality of teeth disposed on the arcuate boundaries of the respective blades.

9. A tool according to any preceding claim characterised in that one blade (C2) includes a portion disposed adjacent the support means (S) having saw teeth (C4) shaped for cutting solid wood-like material, and a cover (C5) slidably mounted on at least the said one blade for shielding the saw teeth (C4) when not in use.

10. A tool according to any preceding claim characterised in that it includes a first handle (S1) and a second handle (S2), the first handle (S1) being fixed relatively to the support body (S6), and the second handle (S2) being hingedly movable around the hinge pin together with cutting member (C), the power source (M) and the drive means.

## Patentansprüche

1. Motorbetriebenes Schneidwerkzeug mit
einer Energiequelle (M),
einem Schneidelement (C), das wenigstens ein bewegliches gezahntes Messer aufweist,
einer Antriebseinrichtung zur Antriebsverbindung der Energiequelle (M) und des Schneidmessers (C),
einer Halteeinrichtung (S), die das Schneidmesser (C) hält und einen Haltekörper (S6) und wenigstens einen Handgriff (S2) aufweist, und
einer Gelenkverbindung (R) mit einem Gelenkstift, der quer zum Schneidelement (C) angeordnet ist, so daß das Schneidelement (C) in einer von mehreren verschiedenen Arbeitspositionen angeordnet werden kann,
dadurch gekennzeichnet, daß die Energiequelle (M), das Schneidelement (C), die Antriebseinrichtung und der wenigstens eine Handgriff (S2) einen Schneidteil bilden und der Schneidteil schwenkbar durch die Gelenkverbindung (R) zwischen dem Schneidteil und dem Haltekörper (S6) am Haltekörper (S6) gehalten ist.

2. Motorbetriebenes Schneidwerkzeug nach Anspruch 1, gekennzeichnet durch Einrichtungen zum Festlegen des Schneidelementes (C) in einer gewählten Arbeitsposition.

3. Werkzeug nach Anspruch 1 oder 2, gekennzeichnet durch einen Handgriff (S1), der von der Halteeinrichtung (S) gehalten ist, einen Hauptschalter (S4) zum Steuern der elektrischen Energieversorgung der Antriebsquelle (M) und wenigstens einen Notsicherheitsschalter, der am Handgriff (S1) zur Betätigung durch eine Bedienungsperson angebracht ist.

4. Werkzeug nach einem vorhergehenden Anspruch, dadurch gekennzeichnet, daß das Schneidelement (C) zwei Messer (C1, C2), die jeweils Schneidzähne aufweisen, und Einrichtungen zum Erzeugen einer relativ hin- und hergehenden Bewegung der Messer aufweist, um eine Schneidwirkung hervorzurufen, die aus der Wechselwirkung der Zähne der beiden Messer (C1, C2) resultiert.

5. Werkzeug nach Anspruch 4, dadurch gekennzeichnet, daß das Werkzeug Einrichtungen zum unabhängigen Antreiben jedes Messers (C1, C2) aufweist.

6. Werkzeug nach Anspruch 4, dadurch gekennzeichnet, daß ein Messer (C2) festliegt und das andere Messer (C1) relativ dazu hin- und herbeweglich angebracht ist.

7. Werkzeug nach Anspruch 4, dadurch gekennzeichnet, daß ein gezahntes Messer (C2) festliegt und das andere Messer (C1) mehrere Zähne umfaßt, die an einem Endlosträger angebracht sind, der eine Schleife bildet, und Einrichtungen zum Antreiben des anderen Messers längs eines geschlossenen Weges vorgesehen sind, um eine Schneidwirkung aus der Wechselwirkung der Zähne jedes Messers (C1, C2) zu erzeugen.

8. Werkzeug nach Anspruch 4, dadurch gekennzeichnet, daß jedes Messer (C1, C2) in Form eines Kreissektors ausgebildet ist und mehrere Zähne an den bogenförmigen Rändern der jeweiligen Messer angeordnet sind.

9. Werkzeug nach einem vorhergehenden Anspruch, dadurch gekennzeichnet, daß ein Messer (C2) einen Abschnitt aufweist, der neben der Halteeinrichtung (S) angeordnet ist und Sägezähne (C4) aufweist, die zum Schneiden von festem holzartigen Material geformt sind, und eine Abdeckung (C5) gleitend verschiebbar wenigstens auf dem einen Messer angebracht ist, um die Sägezähne (C2) abzuschirmen, wenn sie nicht benutzt werden.

10. Werkzeug nach einem vorhergehenden Anspruch, dadurch gekennzeichnet, daß es einen ersten Handgriff (S1) und einen zweiten Handgriff (S2) aufweist, wobei der erste Handgriff (S1) relativ zum Haltekörper (S6) festliegt und der zweite Handgriff (S2) zusammen mit dem Schneidelement (C), der Antriebsquelle (M) und der Antriebseinrichtung um den Gelenkstift schwenkbeweglich ist.

## Revendications

1. Outil de coupe motorisé comprenant
une source de puissance (M)
un élément de coupe (C) comprenant au moins une lame dentée mobile,
un moyen d'entraînement pour relier la source de puissance (M) avec l'élément de coupe (C) de manière à l'entraîner,
un moyen de support (S) supportant l'élément de coupe (C) et comprenant un corps de support (S6) et au moins une poignée (S2), et
une liaison à charnière (R) comportant une broche de charnière disposée en travers de l'élément de coupe (C) grâce à laquelle l'élément de coupe (C) peut être disposé dans l'une quelconque d'une pluralité de positions opérationnelles différentes
caractérisé en ce que la source de puissance (M), l'élément de coupe (C), le moyen d'entraînement et au moins une poignée (S2) constituent une partie de coupe, et en ce que la partie de coupe est supportée de manière à pivoter par le corps de support (S6) au moyen de la liaison à charnière (R) disposée entre la partie de coupe et le corps de support (S6).

2. Outil de coupe motorisé selon la revendication 1, caractérisé par un moyen pour fixer l'élément de coupe (C) dans toute position sélectionnée de fonctionnement.

3. Outil selon la revendication 1 ou 2, caractérisé en ce que l'outil comprend en outre une poignée (S1) portée par le moyen de support (S), un commutateur principal (S4) pour commander le courant électrique à la source de puissance (M) et au moins un commutateur d'urgence monté sur la poignée (S1) pour être mis en action par un opérateur.

4. Outil selon l'une quelconque des revendications précédentes, caractérisé en ce que l'élément de coupe (C) comprend deux lames (C1, C2), chacune comportant des dents de coupe et un moyen pour créer un mouvement de va-et-vient réciproque des lames afin de produire une action de coupe résultant de l'interaction des dents de chaque lame (C1, C2).

5. Outil selon la revendication 4, caractérisé en ce que l'outil comprend un moyen pour entraîner chaque lame (C1, C2) de manière indépendante.

6. Outil selon la revendication 4, caractérisé en ce que cette lame (C2) est fixe et en ce que l'autre lame (C1) est montée pour avoir un mouvement de va-et-vient par rapport à celle-ci.

7. Outil selon la revendication 4, caractérisé en ce que l'une des lames dentées (C2) est fixe et en ce que l'autre lame (C1) comprend une pluralité de dents montées sur un support sans fin formant une boucle, et un moyen pour entraîner ladite autre lame suivant une trajectoire fermée pour réaliser une action de coupe à partir de l'interaction des dents de chaque lame (C1, C2).

8. Outil selon la revendication 4, caractérisé en ce que chaque lame (C1, C2) a la forme d'un secteur de cercle et comporte une pluralité de dents disposées sur les bords en forme d'arc des lames correspondantes.

9. Outil selon l'une quelconque des revendications précédentes, caractérisé en ce que cette lame (C2) comprend une partie disposée au voisinage du moyen de support (S) comportant des dents de scie (C4) formées pour couper de la matière solide du type bois, et un couvercle (C5) monté de façon à pouvoir coulisser sur au moins ladite lame pour protéger les dents de scie (C4) lorsqu'elles ne sont pas utilisées.

10. Outil selon l'une quelconque des revendications précédentes, caractérisé en ce qu'il comprend une première poignée (S1) et une seconde poignée (S2), la première poignée (S1) étant fixe par rapport au corps de support (S6), et la seconde poignée (S2) pouvant se déplacer en pivotant autour de la broche de charnière en même temps que l'outil de coupe (C), que la source de puissance (M) et que le moyen d'entraînement.
